# EUROPEAN PATENT APPLICATION

(11) **EP 4 786 361 A1**
(43) Date of publication of application: **05.08.2026**
(21) Application number: 25155898.7
(22) Date of filing: 04.02.2025
(51) Int. Cl.: B65D 25/00, B65G 1/04, B65G 1/137, B65G 65/00, G07F 1/00

(54) **CONTAINER**

(71) Applicant: AutoStore Technology AS, 5578 Nedre Vats (NO)
(72) Inventor: HATTELAND, Magne, 5578 Nedre Vats (NO); AUSTRHEIM, Trond, 5578 Nedre Vats (NO); AARSETH, Simen, 5578 Nedre Vats (NO)
(74) Representative: Kilburn & Strode LLP

(57) **Abstract**

The disclosure relates to a container for use in an automated storage and retrieval system, the container comprising a first opening in a sidewall of the container arranged to enable insertion or removal of items therethrough, wherein the container is configured to interact with a drive mechanism to enable items stored within the container to move towards the first opening.

## Description

### TECHNICAL FIELD

The disclosure relates to a container. More particularly, it relates to a container for use in an automated storage and retrieval system, methods for retrieving an item from a container, and methods for moving an item from one container to another.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In order to remove an item from the grid, the item must be removed from the container in which it is stored. A known method for removing an item from a container comprises delivering the container in which the item is stored to a port at the periphery of the grid, at which point items within the container can be picked, via an opening in the top of the container, by human operators and/or robotic arms. The use of robotic arms can be expensive, and human operators may be exposed to potential safety hazards.

In order to move an item from a first container to a second container, the item must be retrieved from the first container and placed in the second container. A known method for moving an item from a first container to a second container comprises delivering, by a robotic container-handling vehicle, both containers to a port at the periphery of the grid, at which point the item can be moved by a human operator and/or robotic arm from the first container to the second container. This typically takes place by picking via an opening in the top of the first container and depositing via an opening in the top of the second container. Both containers may then be returned to the grid by a robotic container-handling vehicle. Delivering the containers to a port and then returning the containers back to the grid using a robotic container-handling vehicle may be energy-intensive, take a considerable amount of time, and place wear and tear on the robotic container-handling vehicle.

### SUMMARY

One or more aspects of an invention are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a container and a drive mechanism suitable for use in the system of Fig. 1;
Fig. 6 shows a container (e.g., the container of Fig. 5) interacting with a drive mechanism;
Fig. 7 shows a container (e.g., the container of Figs. 5 or 6) interacting with a drive mechanism to move an item into a chute;
Figs. 8A-C show another container and drive mechanism suitable for use in the system of Fig. 1;
Fig. 9 shows a close-up view of the container of Figs. 8A-C;
Fig. 10 shows a container with an integrated drive mechanism, suitable for use in the system of Fig. 1;
Fig. 11 shows a stack of containers (e.g., the containers of Fig. 10) in electrical communication;
Fig. 12 shows two containers (e.g., two containers of the type depicted in Fig. 10) arranged to enable movement of an item from one container to the other container;
Fig. 13 shows another arrangement of two containers to enable movement of an item from one container to the other container;
Fig. 14 shows a flow chart of a method for retrieving an item from a container (e.g., the container of Fig. 10);
Fig. 15 shows a flow chart of a method for retrieving an item from a container (e.g., the container of any of Figs. 5-9);
Fig. 16 shows a flow chart of a method for moving an item from a first container (e.g., the container of Fig. 10) to a second container;
Fig. 17 shows a flow chart of a method for moving an item from a first container (e.g., the container of any of Figs. 5-10) to a second container.

### DETAILED DESCRIPTION

In overview, the disclosure relates to a container for use in an automated storage and retrieval system, and to methods for retrieving an item from the container and for moving an item from the container to another container. The container is configured to interact with a drive mechanism to enable items stored within the container to move towards an opening of the container. In general, the container is configured to interact with a drive mechanism that is either external to the container or integrated with the container. In either case, by situating the drive mechanism within or at the periphery of the grid, items may be retrieved from the container without having to remove the container from the grid. This reduces the distance the container is required to travel during operation of the automated storage and retrieval system, and therefore saves time, resources, and reduces wear and tear on robotic container-handling vehicles of the automated storage and retrieval system. In this way, general efficiency of the automated storage and retrieval system may be improved.

In more detail, containers according to the present disclosure have at least one opening in a sidewall the allows for insertion or removal of items therethrough in a generally horizontal direction. In some embodiments, the container is configured to interact with a separate drive mechanism that engages with items disposed in the container and causes the items to move towards the opening in the sidewall so that the items can be removed from the container. In some embodiments, the container comprises helical coil mechanisms that engage with items disposed in the container, wherein each coil mechanism is arranged such that items disposed in the container are moved in a generally horizontal direction towards the first opening when the coil mechanism is rotated about its longitudinal axis. The coil mechanisms may be configured to engage with a separate drive mechanism that, when engaged with the coil mechanisms, causes the coil mechanisms to rotate. In some embodiments, the container comprises an integrated drive mechanism such as one or more conveyors upon which items disposed in the container rest, or coil mechanisms in permanent connection with a drive arrangement that causes the coils to rotate.

In general, the drive mechanism is arranged so that when a container interacts with the drive mechanism, items stored within the container are moved in a generally horiztonal direction towards a side opening of the container. Example implementations include but are not limited to:
- A drive mechanism comprising one or more conveyor belts or sloped ribs that are receivable by openings in the bottom of the container and which are configured such that items stored within the container may be moved towards the side opening by the conveyor belts or sloped ribs when received by the openings in the bottom of the container. The container may be lowerable over the drive mechanism so that the conveyor belts or sloped ribs can be received by the openings in the bottom of the container.
- A drive mechanism comprising one or more conveyor belts, the drive mechanism being integrated with the container. For example, the drive mechanism may be situated at the bottom of the inside of the container, such that items stored within the container are disposed over the conveyor belt(s) so that the items are moved towards the side opening by the conveyor belt(s) when in operation.
- A drive mechanism comprising one or more gears arranged to engage with gears of the container which are operatively connected to one or more coil mechanisms disposed in the container. When the gears of the drive mechanism rotate, the gears of the container are caused to rotate, which in turn causes rotation of the coil mechanisms, thereby moving items stored within the container towards the side opening of the container. The container may be lowerable over the drive mechanism so that the gears of the container can engage with the gears of the drive mechanism.

The disclosure also relates to methods for moving an item from one container to another container. In one example, two containers, each having an opening in at least one of their sides, are positioned so that their openings are adjacent (i.e., facing one another). A drive mechanism is controlled to move an item from one container to the other container through their respective openings. In another example, a first container is positioned above a second container so that when a drive mechanism is controlled to move an item from and out of the first container, the item is passed out of a side opening of the first container and falls into the second container via a top opening of the second container. In this way, the two containers need not be removed from the grid in order to move an item from one container to the other. This reduces the time required to move an item from one container to another, and therefore improves an overall efficiency of the automated storage and retrieval system. Since a distance that a container is required to travel is reduced, robotic container-handling vehicles of the automated storage and retrieval system are freed up for other tasks, thereby improving the overall productivity of the automated storage and retrieval system. Furthermore, wear and tear on the robotic container-handling vehicles may be reduced, thereby improving the longevity of the robotic container-handling vehicles.

The apparatus and methods described herein can be used to improve the retrieval of items from containers to provide an improved (e.g., more efficient and/or more productive) automated storage and retrieval system.

The preceding overview is provided to introduce in simplified form a selection of concepts that are further described herein. The overview is not intended to identify key or essential features of the invention.

### Automated storage and retrieval system overview

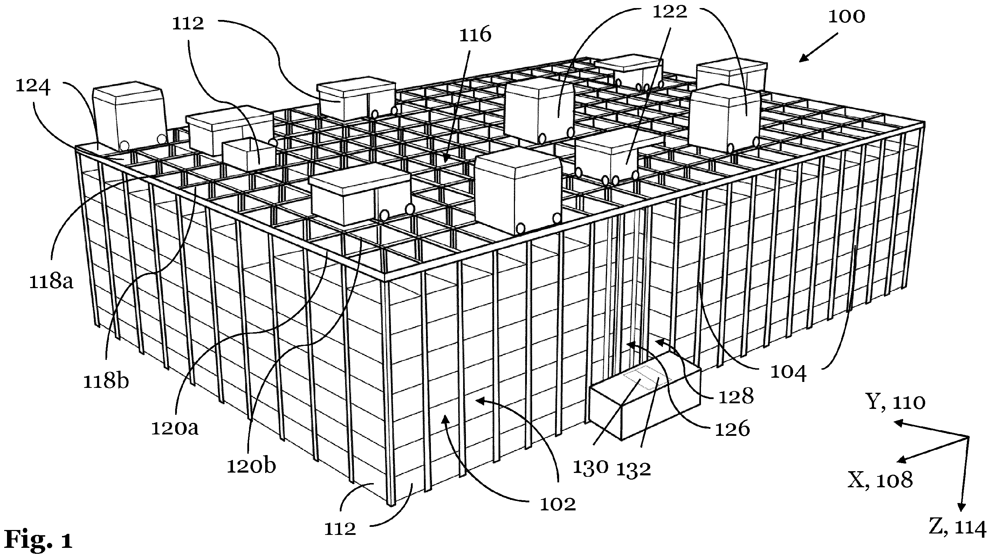

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

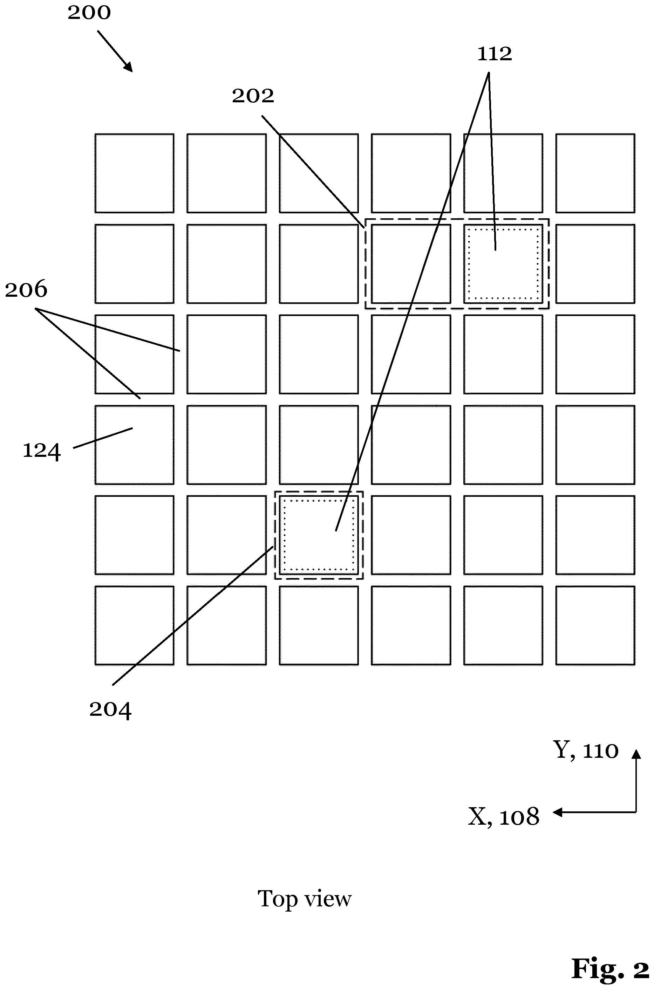

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

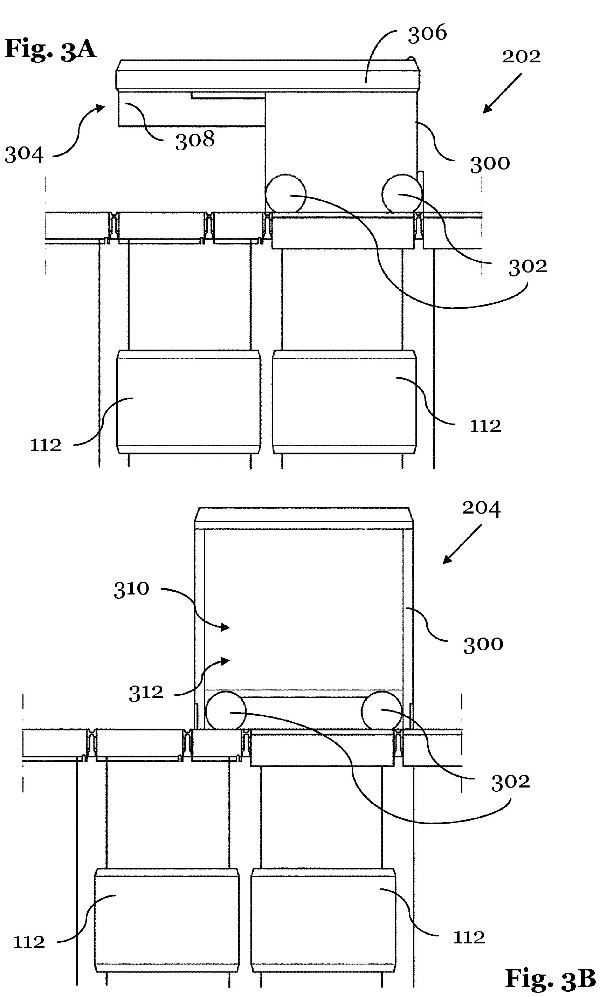

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

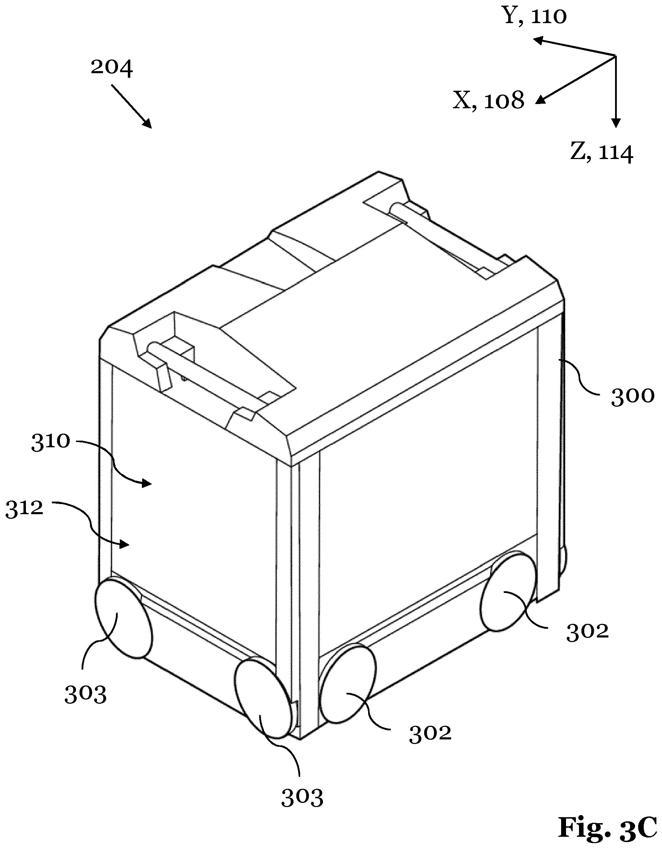

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

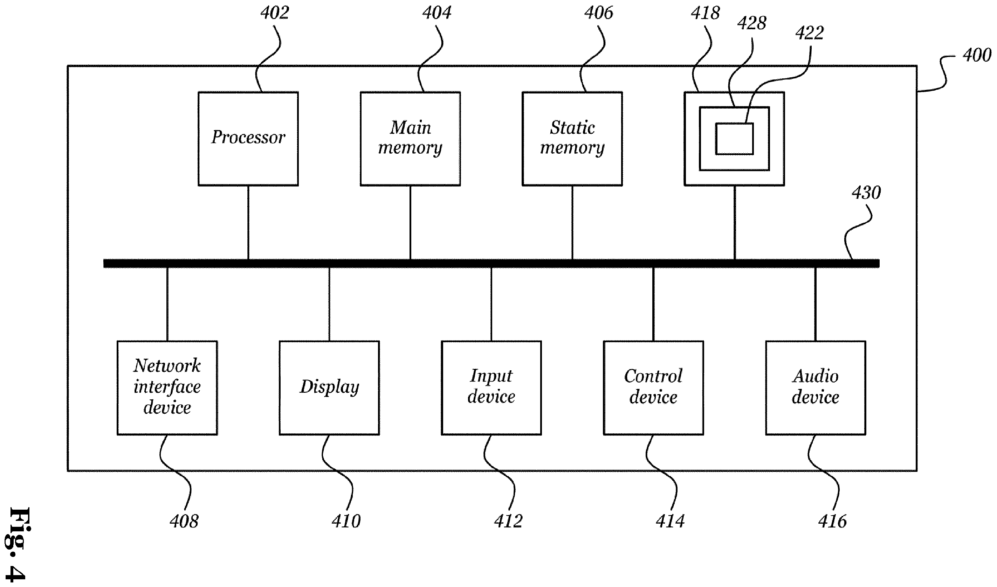

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Item retrieval

As described above, an automated storage and retrieval system may store containers in a storage grid. The automated storage and retrieval system may store a large number of containers, for example hundreds of containers, each possibly including many items. When it is desired to retrieve an item from the storage grid, the item must be removed from the container in which it is stored. This often involves transporting the container to a position outside the storage grid where items can be picked from the container (e.g., by a human operator or a robotic picking arm), and then reintroducing the container back into the storage grid. In order to reduce costs and to improve safety and efficiency, it is desirable that items can be retrieved from containers without the use of expensive equipment and with minimal human intervention. It is also desirable that items can be moved from one container to another without having to temporarily remove both containers from the storage grid.

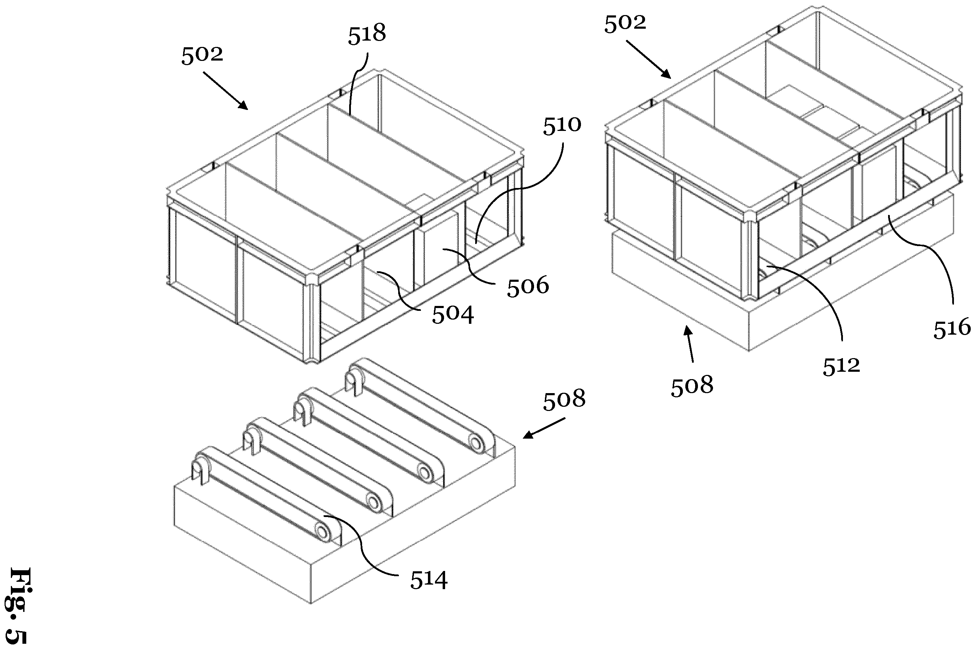

Fig. 5 depicts a container 502 for use in an automated storage and retrieval system. The container 502 comprises an opening 504 in a side (i.e., a sidewall) of the container 502. In more detail, containers disclosed herein generally comprise a base and one or more sidewalls extending upwards from the base. The containers may be generally cuboid-shaped with the base of the container defining a base of the cuboid, and the one or more sidewalls defining sides of the cuboid. The container may comprise a top side on an opposite end of the sidewalls to the base, although in some embodiments the top of the container may be open. The opening in the side of the container may be an opening on of the sidewalls, or may be an absence of a sidewall on one side of the cuboid-shaped container. In the particular example of a container shown in Fig. 5, the opening 504 in the side is provided as an absence of a sidewall on one side of the container. The opening 504 of the container 502 is arranged so that items 506 may be inserted into or removed from the container 502 through the opening 504, i.e., in a generally horizontal direction. The opening 504 may span the entire width and/or height of the side of the container 502, or only a portion thereof. The container 502 is configured to interact with a drive mechanism 508, 1004 to enable items 506 stored within the container 502 to move towards the opening 504.

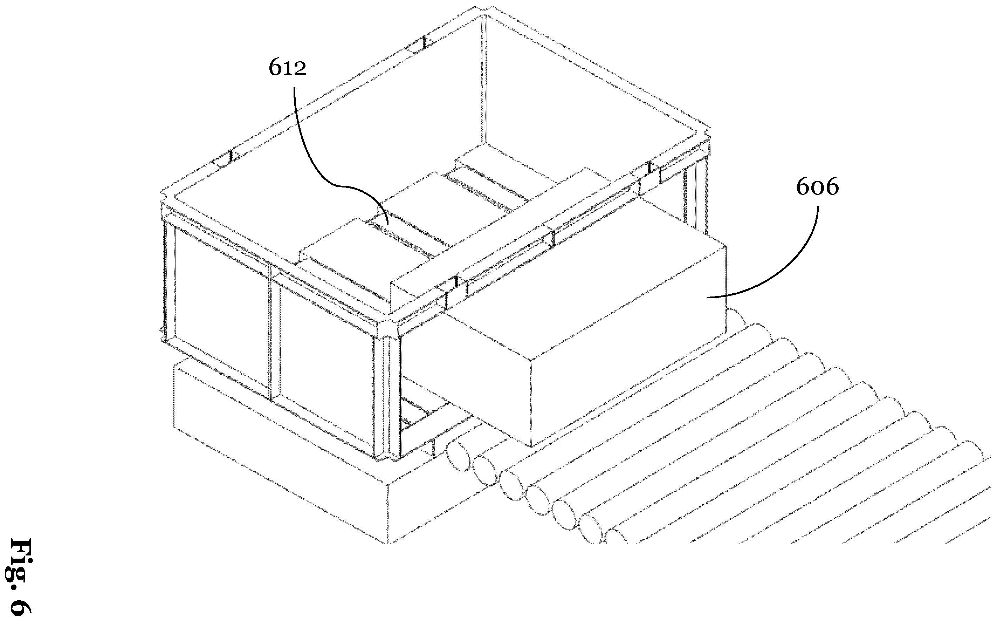

The container 502 may include one or more dividers 518 arranged to divide an inner volume of the container 502 into two or more sections. In this way, items 506 stored in a first section of the container 502 may be physically separated from items 506 stored in a second section of the container 502, and items 506 may be dispensed from each section through a respective opening 504. Dividing items 506 into different sections may be desirable when the container 502 includes items of different types, or if certain items are not to be mixed with other items. For example, a container 502 storing items of clothing may store shirts in a first section and trousers in a second section. By storing items 506 in different sections of the container 502, items 506 in each section may be retrieved from the container 502 (through a respective opening 504) independently of items 506 in other sections, thereby reducing the need to separate out items 506 in the container 502 from other items 506 in order to retrieve a desired item 506. This improves the efficiency of retrieving items from containers, and therefore improves the overall efficiency of the automated storage and retrieval system. The one or more dividers 518 may be removable, so that the inner volume of the container 502 may be adapted to suit its expected contents. For example, a container 502 intended to store larger items may include fewer dividers 518, or no dividers 518 at all (as in the case of the container depicted in Fig. 6), in order to accommodate relatively large items such as cases 606, which are also in Fig. 6.

Since the container 502 has an opening 504 in one of its sides, there is a risk that items 506 may fall out of the container 502 through the opening 504 during transportation (e.g., by a robotic container-handling vehicle 122). With this in mind, the container 502 may comprise a raised portion 516 (or 'ridge', `lip', or 'flange') at an edge of the base of the container 502 at or near the opening 504.

The raised portion 516 is arranged to prevent items 506 from passing through the opening 504 and out of the container 502 when the items are resting on a base of the container. For example, the raised portion 516 may extend in a vertical direction from the base of the container 502, so that items 506 in the container 502 moving towards the opening 504 are stopped when they make contact with the raised portion 512.

The raised portion 516 may be further arranged so that when the container 502 is in interaction with a drive mechanism 508, 1004, items 506 stored in the container 502 are not prevented from passing through the opening 504 and out of the container 502. For example, the height of the raised portion 516 may be such that when the container 502 is interacting with a drive mechanism 508 and the items 506 stored in the container 502 are positioned above the drive mechanism, the items 506 are displaced in a vertical direction by the drive mechanism 508 such that they may pass through the opening 504 of the container 502 unhindered by the raised portion 516. In other words, when the items 506 are displaced in the vertical direction by the drive mechanism 508, the items 506 may be higher than a top of the raised portion 516, in which case the items 506 may move freely over the raised portion 516 and out through the opening 504 of the container 502. In other words, the drive mechanism 508, when interacting with the container 502, raises the items 506 stored in the container 502 higher than the raised portion 516 so that horizontal movement of the items 506 out of the opening 504 is not hindered by the raised portion 516. Additionally or alternatively, the raised portion 516 may be actuatable in a vertical direction by means of an actuator, to selectively enable or prevent items 506 from passing through and out of the opening 504 of the container 502 in a horizontal direction.

The height of the raised portion 516 may be chosen in accordance with a size of the item(s) 506 that the container 502 is expected to hold. For instance, a container 502 intended for storing relatively large items 506 may have a relatively large raised portion 516, so that the items 506 are effectively prevented from passing through and out of the opening 504 during transportation of the container 502.

If the container 502 includes two or more sections (e.g., by way of its inner volume being divided by one or more dividers 518), then the container 502 may include multiple raised portions 516. For example, the container 502 may include a raised portion 516 for each section of the container 516. The raised portion 516 may extend across the full extent of the edge of the base of the container 502 (as depicted for example in Fig. 5), or it may extend across only a subsection thereof.

In general terms, the container 502 may comprise a raised portion 516 at an edge of a base of the container 502, the edge proximal to the opening 504, wherein the raised portion 516 is arranged to prevent items 506 from passing through the opening 504 and out of the container 502 when the container 502 is not interacting with the drive mechanism 508.

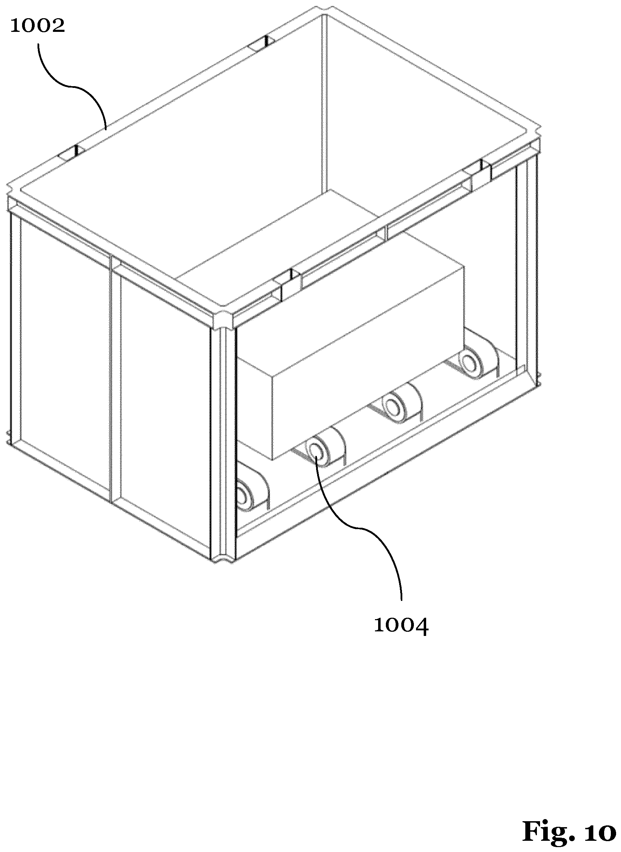

As mentioned earlier, the container 502 is configured to interact with a drive mechanism 508,1004 to enable items 506 stored within the container 502 to move towards the opening 504. The container 502 may interact with several different types of drive mechanisms 508, 1004. For example, the drive mechanism 508, 1004 may be an external drive mechanism 508 (i.e., it may be separate from and engageable with the container 502, as depicted in Figs. 5-9), or it may be an integrated drive mechanism 1004 (i.e., it may be integrated with the container 502, as depicted in Figs. 10-12).

### External drive mechanisms

Referring again to Fig. 5, the container 502 is configured to interact with an external drive mechanism 508. In particular, the lefthand side of Fig. 5 depicts the container 502 and a drive mechanism 508 (described below) separately, whilst the righthand side of Fig. 5 depicts the container 502 engaged with the drive mechanism 508. As depicted in Fig. 5, the container 502 may comprise one or more second openings 510 in the base of the container 502 which are arranged to receive respective portions 512 of the drive mechanism 508. When the portions 512 of the drive mechanism 508 are received by the one or more second openings 510, the portions 512 are able to engage with items 506 stored in the container 502 and move the items 506 towards the opening 504. In other words, the container 502 may further comprise one or more second openings 510 in a base of the container 502 arranged to receive respective portions 512 of the drive mechanism 508, wherein the one or more second openings 510 in the base are arranged such that when the portions 512 of the drive mechanism 508 are received therein, the portions 512 of the drive mechanism 508 are able to engage with items 506 stored in the container 502 and move the items 506 towards the opening 504.

As shown in Fig. 5, the drive mechanism 508 may comprise one or more conveyor belts 514, although the skilled person will appreciate that the drive mechanism 508 may comprise wheels, rollers, or any other appropriate means for conveying items instead of or in addition to conveyor belts 514.

Each of the one or more conveyor belts 514 of the drive mechanism 508 may be received by a respective second opening 510 of the container 502. In general, the second opening(s) 510 of the container are shaped to accommodate the conveyor belts of the drive mechanism 508. For example, the second opening(s) 510 may be elongate with a length and width corresponding to the length and width of the conveyor belts. Similarly, the positions of the second openings 510 in the base of the container 502 are located in positions corresponding to the positions of the conveyor belts of the drive mechanism. The container 502 may be caused to interact with the drive mechanism 508 in this way by lowering the container 502 (e.g., using a robotic container-handling vehicle 122) over the drive mechanism 508, or by raising the drive mechanism 508 to meet the underside of the container 502. When received by the second openings 510 of the container 502, the conveyor belts 514 may engage with items 506 disposed over the second openings 510 so that when the conveyor belts 514 are in operation, the items 506 are moved by the conveyor belts 514 towards the opening 504 of the container 502. In more general terms, each portion 512 of the drive mechanism 508 may comprise one or more conveyor belts 514 or one or more rollers, and each second opening 510 in the base of the container 502 may be arranged to receive a respective one or more conveyor belts 514 or one or more rollers of the drive mechanism 508 that is able to engage with items 506 disposed over the second opening 510.

The conveyor belts 514 of the drive mechanism 508 may be operated simultaneously or independently. That is, a single conveyor belt 514 may be operated at a time, or any combination of multiple conveyor belts 514 may be operated simultaneously. For instance, with reference to the earlier example of a container 502 storing shirts in a first section and trousers in a second section, a shirt may be retrieved from the container 502 by operating only the conveyor belt 514 that is received by a second opening 510 in the first section of the container 502. Alternatively, if it is desired to retrieve all items 506 (e.g., all the shirts and trousers) from the container 502, then all conveyor belts 514 of the drive mechanism 508 may be operated simultaneously. Although in this example the drive mechanism 508 comprises multiple conveyor belts 512, one for each section of the container 502, the drive mechanism 508 may still comprise multiple conveyor belts 512 (each received by a respective second opening 510 of the container 502) when the container 502 comprises only a single section (i.e., its inner volume is not divided by dividers 518), as depicted in Fig. 6. The use of multiple conveyor belts 512 in this way is especially advantageous when a greater amount of power or torque is required to move items, for example when the container 502 is intended to store large, potentially heavy items 506 such as cases 606 (shown in Fig. 6).

Alternatively, the drive mechanism 508 may comprise one or more sloped ribs (not shown). The sloped ribs may be received by respective second openings 510 in the base of the container 502. The sloped ribs are able to engage with items 506 disposed over the second opening 510. The sloped ribs may have a negative incline which is directed towards a position of the opening 504 of the container 502 when the container 502 is interacting with the drive mechanism 508. In general terms, each portion 512 of the drive mechanism 508 may comprise a sloped rib, wherein each second opening 510 in the base of the container 502 is arranged to receive a respective sloped rib of the drive mechanism 508 that is able to engage with items 506 disposed over the second opening 510, and wherein the sloped rib has a negative incline directed towards the opening 504 such that items 506 engaging with the sloped rib are moved towards the opening 504.

Due to the negative incline of the sloped ribs, items 506 engaged with the sloped ribs are moved towards the opening 504 of the container 502. More specifically, the container 502 may be lowered (e.g., by a robotic container-handling vehicle 122) over the drive mechanism 508 so that the sloped ribs are received by the second openings 510 of the container 502 and the inclined surface of the sloped ribs makes contact with the items 506 stored in the container 502, thereby moving the items 506 towards the opening 504 of the container 502. Additionally or alternatively, each sloped rib of the drive mechanism 508 may be actuatable in a vertical direction by means of one or more vertical actuators (not shown) of the drive mechanism 508. For example, when the container 502 is positioned above the drive mechanism 508, the sloped ribs may be actuated in the vertical direction so that the sloped ribs may be received by the second openings 510 of the container 502 in order to engage with items 506 stored in the container. As the sloped ribs are moved in the vertical direction by vertical actuators of the drive mechanism 508, items 506 that make contact with the inclined surface of the sloped ribs will be moved towards the opening 504 of the container 502.

The skilled person will appreciate that the sloped ribs may take on many shapes, sizes and forms. For example, the sloped ribs may be triangular, half-triangular, pyramid-shaped, plough-shaped, spherical, cylindrical, elliptical, or any other shape comprising a portion with an appropriate negative incline.

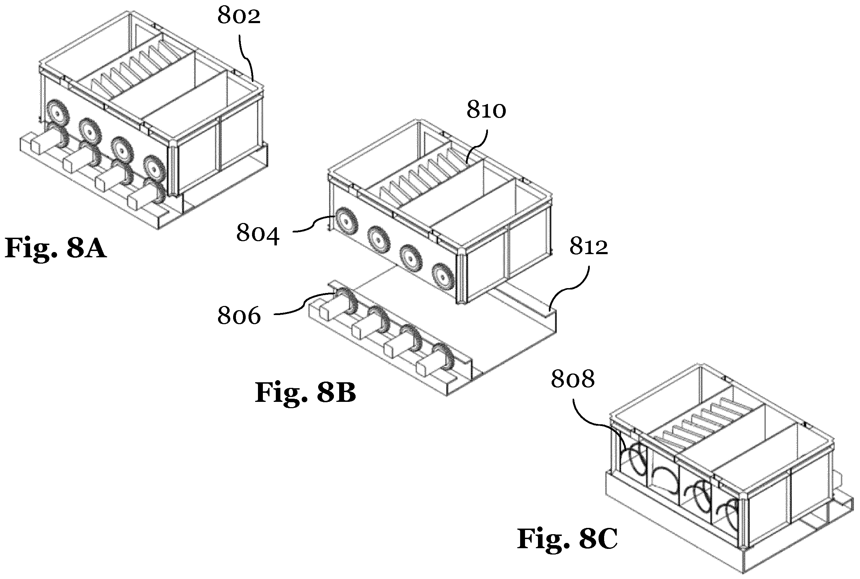

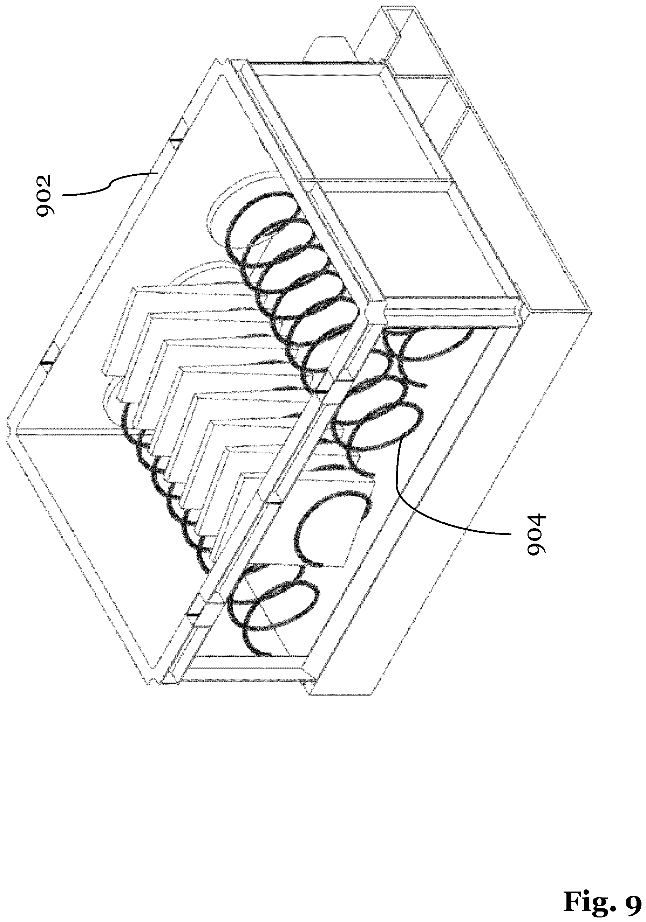

Figs. 8A-C and 9 depict another type of (external) drive mechanism 812 with which a container 502 may interact. The container 802 depicted in Figs. 8A-C and 9 is identical to the container 502 described in relation to Fig. 5 but for the following differences.

As depicted in Fig. 8C, the container 802 comprises one or more coil mechanisms 808. Each coil mechanism 808 may comprise a spiral-shaped (i.e., helical) coil comprising multiple loops such that when the coil mechanism 808 is rotated in one direction about its longitudinal axis, an item disposed in a loop of the coil is moved in a linear direction towards an end of the coil. The coil mechanisms 808 extend longitudinally between the side of the container 802 with the opening 504 and the opposing side of the container 802. The coil mechanisms 808 are arranged such that items 810 disposed in the container 802 are moved towards the opening 504 when the coil mechanism 808 is rotated about its longitudinal axis. Because the container 802 of Figs. 8A-C and 9 comprises the coil mechanism 808, the container need not have openings in the base of the container 802 through which a drive mechanism is received.

The container 802 may further comprise one or more primary gears 804, one for each coil mechanism 808. The primary gears 804 may be operatively connected to the coil mechanisms 808, so that rotation of a primary gear 804 causes rotation of a respective coil mechanism 808, thereby moving items 506 in the container 802 towards the opening 504. The primary gears 804 and the coil mechanisms 808 may be connected in a one-to-one fashion, in which case each coil mechanism 808 may be caused to rotate independently of all other coil mechanisms 808. Likewise, any combination of multiple coil mechanisms 808 may be caused to rotate independently of all other coil mechanisms 808, or all coil mechanisms 808 may be caused to rotate simultaneously. In this way, items 810 may be selectively dispensed from the container 802.

In order to cause rotation of the primary gears 804, which in turn causes rotation of the coil mechanisms 808, the primary gears 804 may be arranged to engage with one or more secondary gears 806 of the drive mechanism 812. When the primary gears 804 engage with the secondary gears 806, rotation of the secondary gears 806 causes rotation of the primary gears 804, which in turn causes rotation of the coil mechanisms 808. The secondary gears 806 may be selectively rotatable, so that, for example, a single secondary gear 806 or any combination of multiple secondary gears 806 may be caused to rotate independently of all other secondary gears 806. Likewise, all secondary gears 806 may be caused to rotate simultaneously.

The secondary gears 806 may be driven (e.g., caused to rotate) by one or more motors (not shown) of the drive mechanism 812, or by any other appropriate driving means. The primary gears 804 of the container 802 may be caused to engage with the secondary gears 806 of the drive mechanism 812 by lowering the container 802 over the drive mechanism 812. Alternatively, the drive mechanism 812 may be raised to meet the container 802 so that the primary gears 804 may engage with the secondary gears 806. In general terms, the container 802 may be configured to be moved to engage with the drive mechanism 812 so that the one or more primary gears 804 engage with the one or more secondary gears 806.

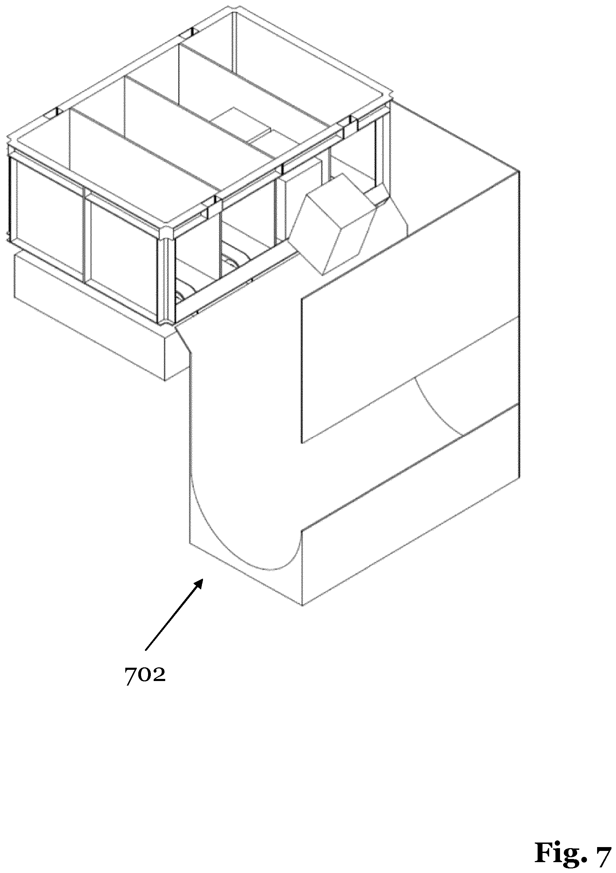

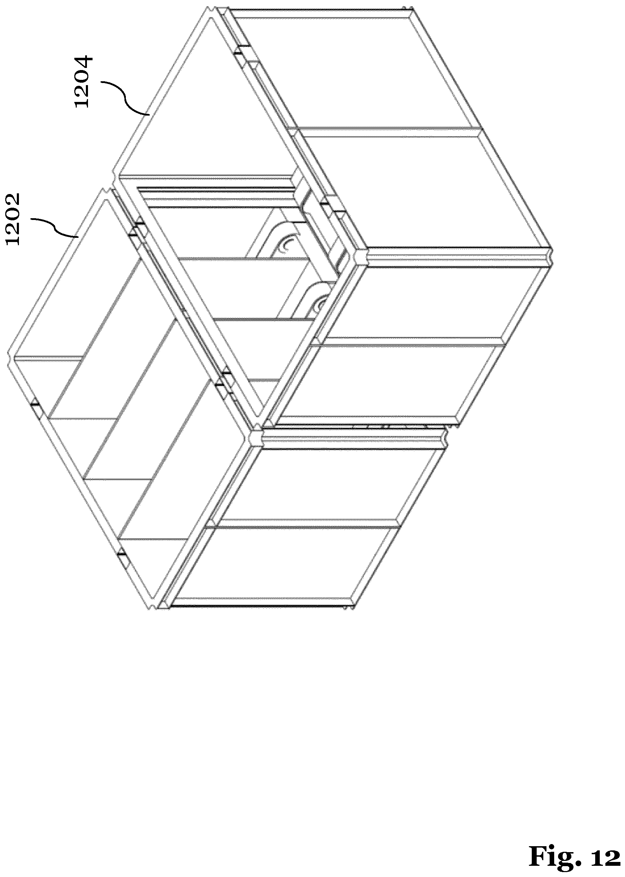

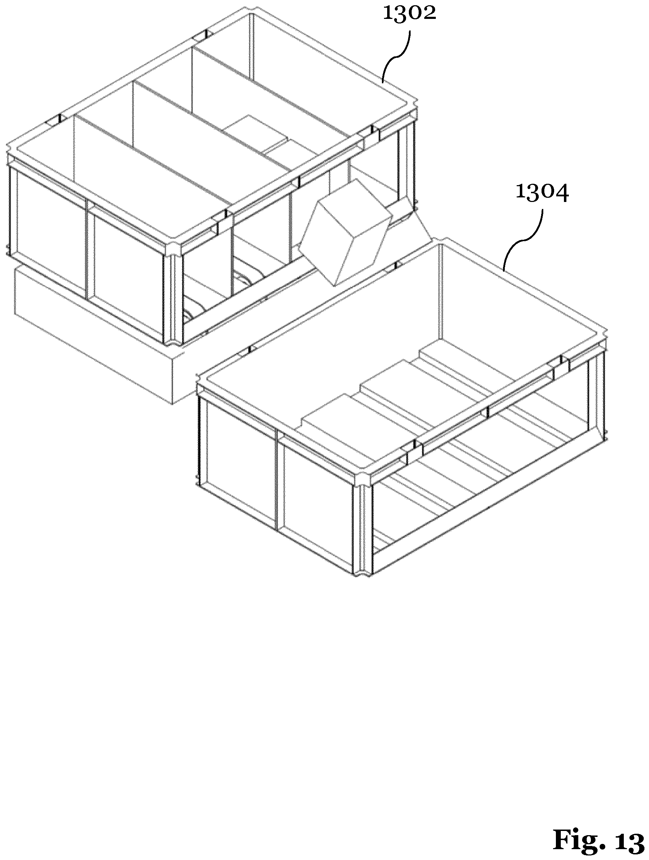

The (external) drive mechanism 508, 812 may be located within the automated storage and retrieval system, for example within the storage grid 100. More particularly, the drive mechanism 508, 812 may be located at a position in a port column 126, 128 (e.g., at the bottom of the port column 126, 128, or at any other cell position within the port column 126, 128) over which the container 502, 802 may be lowered (e.g., by a robotic container-handling vehicle 122) to engage with the drive mechanism 508, 812. By locating the drive mechanism 508, 812 in a port column 126, 128, which has an access point through which bins 112 can enter and leave the column, items 506 stored in a container 502, 802 interacting with the drive mechanism 508, 812 may be moved by the drive mechanism 508, 812 through the access point to a position outside the storage grid 100. For example, the items 506 may be moved by the drive mechanism 508, 812 onto an external conveyor belt or an arrangement of rollers, as depicted in Fig. 6. The items 506 in a container 1302 may also be moved by the drive mechanism 508, 812 into another container 1204, 1304, as depicted in Figs. 12 and 13. Alternatively, as depicted in Fig. 7, the items 506 may be moved by the drive mechanism 508, 812 into a chute 702 or any other appropriate receptacle. By dispensing items 506 into a chute 702, the automated storage and retrieval system may function in a manner similar to a vending machine, in that items 506 may be delivered directly from the storage grid 100 to a customer. As an alternative to the drive mechanism 508, 812 being located at the periphery of the storage grid 100 (e.g., at a port column 126, 128), the drive mechanism 508, 812 may be located within the interior of the storage grid 100. For example, an area of the storage grid 100 may be dedicated to the consolidation of items 506 from multiple containers into a single container. Such an area may comprise a drive mechanism 508, 812 which interacts with multiple containers 502, 802 to move the items 506 stored by each of the multiple containers 502, 802 to a separate consolidation container. Transfer of items between containers in this manner is described in more detail below with reference to Figs. 12 and 13.

### Integrated drive mechanisms

As described above, a container 502, 802 may interact with an external drive mechanism 508, 812 in order to move items 506 out of the container 502, 802. Alternatively, the container 1002 may comprise the drive mechanism 1004, as depicted in Figs. 10-12. That is, the drive mechanism 1004 may be integrated with the container 1002. Containers 1002 with an integrated drive mechanism 1004 are advantageously able to move items 506 out of the container 1002 at any location within or outside the storage grid 100, since the ability to move items 506 out of the container 1002 does not depend on interaction with an external drive mechanism. As described above in relation to external drive mechanisms 508, 812, items 506 may similarly be moved by the integrated drive mechanism 1004 onto an external conveyor belt or an arrangement of rollers, as depicted in Fig. 6. The items 506 in a container 1002 may also be moved by the integrated drive mechanism 1004 into another container 1204, 1304, as depicted in Figs. 12 and 13. Alternatively, as depicted in Fig. 7, the items 506 may be moved by the integrated drive mechanism 1004 into a chute 702 or any other appropriate receptacle. By dispensing items 506 into a chute 702, the automated storage and retrieval system may function in a manner similar to a vending machine, in that items 506 may be delivered directly from the storage grid 100 to a customer.

Referring to Fig. 10, the container 1002 may comprise one or more conveyor belts 1004 or rollers that are able to engage with items 506 disposed thereon. When in operation, the conveyor belts 1004 move items 506 disposed over the conveyor belts 1004 towards the opening 504 of the container 1002. If an inner volume of the container 1002 is divided into two or more sections as described in relation to the container 502 depicted in Fig. 5, then the container 1002 may comprise one or more conveyor belts 1004 in each section of the container 1002. The conveyor belts 1004 may be operated independently, in order to selectively move certain items 506 towards the opening 504 of the container 1002. That is, each conveyor belt 1004 may be operated independently of all other conveyor belts 1004, or any combination of multiple conveyor belts 1004 may be operated independently of all other conveyor belts 1004, or all conveyor belts 1004 may be operated simultaneously.

Alternatively, the container 1002 may comprise one or more coil mechanisms 808, as described in relation to Figs. 8A-C and 9. In this case, the container 1002 may further comprise one or more integrated motors (not shown) arranged to cause the one or more coil mechanisms 808 to rotate about their respective longitudinal axes, thereby causing items 506 stored within the container 1002 to move in a linear direction towards the opening 504 of the container 1002. If the one or more motors are integrated with the container 1002 in this way, then the container 1002 need not interact with an external drive mechanism (e.g., the drive mechanism 812 described in relation to Figs. 8A-C) in order to cause the coil mechanisms 808 to rotate.

The container 1002 may further comprise a power source (not shown) configured to supply electrical power to the (integrated) drive mechanism 1004 (e.g., the one or more conveyor belts 1004 or the one or more motors). The power source may comprise a rechargeable battery or any other appropriate means for storing electrical energy.

The power source may be chargeable, and may be charged by, for example, removing the power source from the container 1002 and charging the power source at an external location.

Alternatively, the power source may be charged when the container 1002 is disposed at a charging station of the automated storage and retrieval system, thereby enabling the power source of the container 1002 to be charged without having to be removed from the container 1002. For example, one or more locations (e.g., one or more storage cells) of the storage grid 100 may comprise a charging station arranged so that when a container 1002 is disposed at the charging station, the power source of the container 1002 is charged. The charging station may charge the power source of the container 1002 using inductive charging or any other type of wireless power transfer. Additionally or alternatively, the charging station may comprise a power cable (or any other appropriate physical means) arranged to connect to the container 1002 or directly to the power source of the container 1002 when the container 1002 is disposed at the charging station.

In order to detect when a container 1002 is disposed at the charging station, the charging station may comprise a light sensor, motion sensor, contrast sensor, weight sensor or a camera arranged to detect the presence of a container 1002. When the charging station detects the presence of a container 1002, the charging station may supply power to the power source of the container 1002. On the other hand, when the charging station detects the absence of a container 1002, the charging station may cease supplying power.

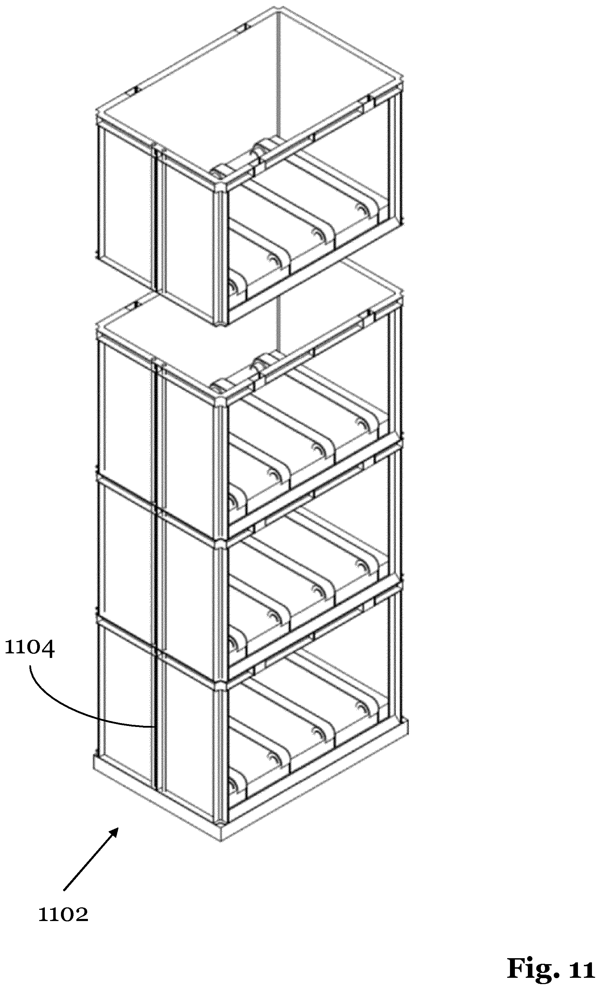

The power source of the container 1002 may also be charged by being in electrical communication with another container whose power source is being charged (e.g., at the above-described charging station). For example, as depicted in Fig. 11, the container 1002 may stack with and be in electrical communication with another container 1002 disposed at the charging station, thereby allowing the charging station to charge the power sources of both containers 1002. Two or more containers 1002 may be in electrical communication directly, e.g., by way of conductive material 1104 of one container 1002 making electrical contact with conductive material 1104 of another container 1002, or indirectly, e.g., through the use of inductive charging. In more general terms, the container 1002 may be vertically stackable so as to be able to produce a vertical stack 1102 of a plurality of containers 1002. The vertical stack 1102 may be formed by lowering, e.g., by a robotic container-handling vehicle 122, a container 1002 onto one or more other containers 1002. As the skilled person will appreciate, the concept of charging the power sources of a stack 1102 of containers 1002 may in theory extend to any number of containers, so that one charging station (or any other source of power) may charge the power sources of multiple containers 1002.

### Methods of retrieval

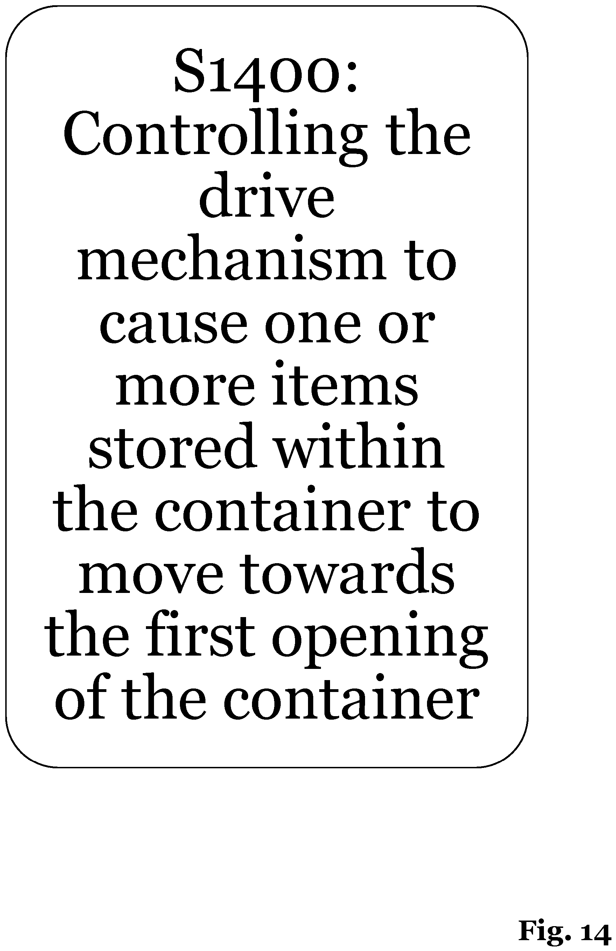

Fig. 14 depicts a flow chart of a method for retrieving an item from a container, wherein the container 1002 comprises an integrated drive mechanism 1004 (e.g., integrated conveyors or integrated coils) as described in relation to Fig. 10.

The method of Fig. 14 comprises a step S1400 of controlling the drive mechanism 1004 to cause one or more items 506 stored within the container 1002 to move towards the opening 504 of the container.

If the drive mechanism 1004 comprises one or more conveyor belts 1004, then the method may involve controlling the supply of electrical power to one or more motors of the drive mechanism 1004 to cause the conveyor belts 1004 to move, thereby moving items 506 disposed on the conveyor belts 1004 towards the opening 504 of the container 1002. As described above in relation to Fig. 10, each conveyor belt 1004 may be caused to move independently, or any combination of multiple conveyor belts 1004 may be caused to move independently of all other conveyor belts 1004, or all conveyor belts 1004 may be caused to move simultaneously.

Prior to controlling the drive mechanism 1004 to cause the items 506 in the container 1002 to move towards the opening 504 of the container 1002, the method may comprise a step of determining whether certain criteria is met subject to which the drive mechanism 1004 is controlled. For example, it may be desired that the method controls the drive mechanism 1004 to move only if the container 1002 is determined to be stationary, in order to prevent items 506 being dispensed from the container 1002 during transportation. Additionally or alternatively, the drive mechanism 1004 may only be controlled to move if it is first determined that the container 1002 is located at a specific position within the storage grid 100 and/or in relation to another container, so that items 506 are moved out of the container 1002 to the intended position. In another example, the drive mechanism 1004 may only be controlled to move if it is first determined, e.g., by a weight sensor, that the container 1002 is not empty.

In general terms, the method depicted in Fig. 14 comprises controlling the drive mechanism 1004 to cause one or more items 506 stored within the container 1002 to move towards the opening 504 of the container 1002.

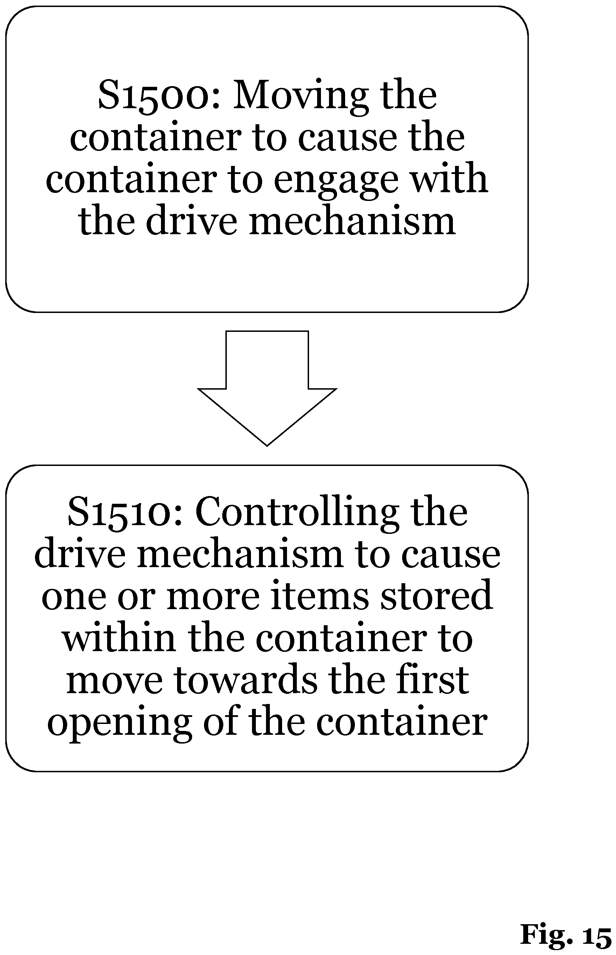

Fig. 15 depicts a flow chart of a method for retrieving an item from a container, wherein the container 502 is as described in relation to any of Figs. 5-9. That is, the method of Fig. 15 is a method for retrieving an item from a container 502 that comprises:
- one or more second openings 510 in a base of the container 502 arranged to receive respective portions 512 of a drive mechanism 508 as described above in relation to Fig. 5; or
- one or more coil mechanisms 808 as described in relation to Fig. 8.

The method of Fig. 15 comprises a first step S1500 of moving the container 502 to cause the container 502 to engage with the drive mechanism 508.

The step S1500 of moving the container 502 may comprise moving the container 502 by a robotic container-handling vehicle 122 of an automated storage and retrieval system. For example, the container 502 may be lowered by a robotic container-handling vehicle 122 into a column 102 of the storage grid 100 in which the drive mechanism 508 may be situated. Alternatively, the container 502 may be moved by the robotic container-handling vehicle 122 to a position outside or at the periphery of the storage grid 100, such as a port 130, 132, where the drive mechanism 508 may be situated.

By lowering or otherwise moving the container 502 to engage with the drive mechanism 508, portions 512 of the drive mechanism 508 may be received by one or more second openings 510 in the base of the container 502. For example, one or more conveyor belts 514 or one or more sloped ribs of the drive mechanism 508 may be received by the second openings 510 of the container 502, thereby enabling the conveyor belts 514 or sloped ribs to move items 506 stored within the container 502 towards the opening 504 of the container 502.

The container may alternatively be lowered or otherwise moved to engage with a drive mechanism 812 comprising one or more secondary gears 806, thereby enabling one or more primary gears 804 of the container 802 to engage with the secondary gears 806 of the drive mechanism 812. When the primary gears 804 of the container 802 engage with the secondary gears 806 of the drive mechanism 812, rotation of the secondary gears 806 causes rotation of the primary gears 804, which in turn causes rotation of the coil mechanisms 808, thereby moving items 506 in the container 802 towards the opening 504 of the container 802.

Once the container 502, 802 has been moved to enable engagement with the drive mechanism 508, 812 at step S1500, the method proceeds to step S1510. At step S1510, the method comprises controlling the drive mechanism 508, 812 to cause items 506 stored within the container 502, 802 to move towards the opening 504 of the container 502, 802.

For example, one or more motors may be controlled to cause movement of one or more conveyor belts 514 of the drive mechanism 508, thereby moving items 506 disposed on or over the conveyor belts 514 towards the opening 504 of the container.

Alternatively, one or more motors may be controlled to cause rotation of secondary gears 806 of the drive mechanism 812, thereby causing rotation of the primary gears 804 of the container 802, which in turn causes rotation of coil mechanisms 808 of the container, thereby moving items 810 stored within the container 802 towards the opening 504 of the container.

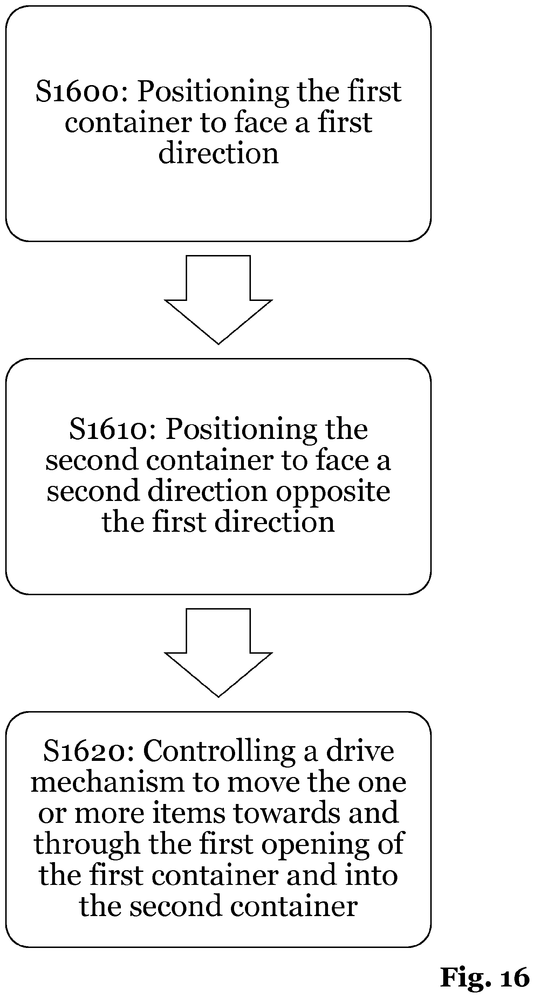

Fig. 16 depicts a flow chart of a method, for use in an automated storage and retrieval system, for moving an item from a first container 1202 to a second container 1204. Each of the first and second containers 1202, 1204 comprises a first opening 504 in a side of the respective container arranged to enable insertion or removal of items 506 stored within the respective container through the first opening 504.

The method of Fig. 16 comprises a first step S1600 of positioning the first container 1202 to face a first direction. For example, the first container 1202 may be positioned within a particular storage cell of the storage grid 100 to face a particular direction. The storage cell may be located in an area of the storage grid 100 dedicated to the moving of items from container to container.

The method of Fig. 16 then proceeds to step S1610. At step S1610, a second container 1204 is positioned to face a second direction opposite the first direction, so that the first opening 504 of the first container 1202 is adjacent to the first opening 504 of the second container 1204. That is, the second container 1204 is positioned so that the first opening 504 of the first container 1202 abuts the first opening 504 of the second container 1204 such that items 506 moving out of the first container 1202 through the first opening 504 of the first container 1202 are able to enter the second container 1204 through the first opening 504 of the second container 1204, and vice versa. For example, the second container 1204 maybe positioned in a cell of the storage grid 100 adjacent to the cell in which the first container 1202 is positioned.

Finally, at step S1620, the method controls a drive mechanism 508, 1004 to move the items 506 stored within the first container 1202 towards and through the first opening 504 of the first container 1202 and into the second container 1204 through the first opening 504 of the second container 1204.

The first container 1202 may be as described in relation to Fig. 10. That is, the first container 1202 may comprise the drive mechanism 1004. In other words, the drive mechanism 1004 may be integrated with the first container 1202. In this case, the step S1620 of controlling the drive mechanism 1004 may comprise instructing a controller (situated, for example, within the container 1202) to supply power from a power source of the container 1202 to the drive mechanism 1004, such as one or more conveyor belts, thereby causing the drive mechanism 1004 to move items 506 from the first container 1202 to the second container 1204 through their respective first openings 504.

Alternatively, the first container 1202 may be as described in relation to Figs. 5-9. That is, the first container 1202 may comprise one or more second openings 510 in a base of the first container 1202 arranged to receive respective portions 512 of the drive mechanism 508. The one or more second openings 510 in the base may be arranged such that when the portions 512 of the drive mechanism 508 are received therein, the portions 512 of the drive mechanism 508 are able to engage with items 506 stored in the first container 1202 and move the items 506 towards the first opening 504. In this case, the step S1600 of positioning the first container 1202 may comprise positioning the first container 1202 such that the one or more second openings 510 in the base of the first container 1202 receive respective portions 512 of the drive mechanism 508. For example, each second opening 510 may receive (a portion of) a conveyor belt 514 or sloped rib by way of the first container 1202 being lowered (e.g., by a robotic container-handling vehicle 122) over the drive mechanism 508, or, similarly, by the drive mechanism 508 being raised to meet and engage with the first container 1202.

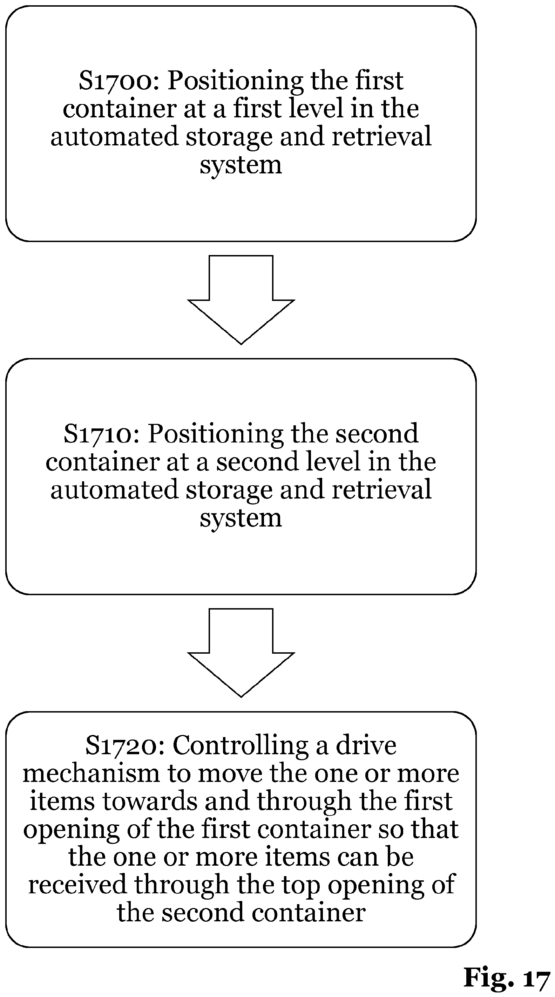

Fig. 17 depicts a flow chart of another method, for use in an automated storage and retrieval system, for moving an item 506 from a first container 1302 to a second container 1304. The first container 1302 comprises a first opening 504 in a side of the first container 1302 arranged to enable insertion or removal of items 506 stored within the first container 1302. The second container 1304 comprises a top opening.

The method of Fig. 17 comprises a first step S1700 of positioning the first container 1302 at a first level in the automated storage and retrieval system. For example, the first container 1302 may be lowered (e.g., by a robotic container-handling vehicle 122) to a particular storage cell within the storage grid 100. The storage cell may comprise a drive mechanism 508 with which the first container 1302 may interact, or, alternatively, the first container 1302 may comprise the drive mechanism 1004 (i.e., the drive mechanism 1004 may be integrated with the first container 1302).

The method of Fig. 17 then proceeds to step S1710. At step S1710, the second container 1304 is positioned at a second level in the automated storage and retrieval system, the second level being lower than the first level. For example, the second level may be lower than the first level by the height of a container, so that the top of the second container 1304 is substantially level with the base of the first container 1302, as depicted in Fig. 13. In this way, the vertical distance between the base of the first container 1302 and the top of the second container 1304 may be minimised, thereby minimising the vertical distance an item 506 is required to fall in order to move from the first container 1302 to the second container 1304. Minimising this vertical distance reduces the likelihood of damage to an item 506 that is being moved from the first container 1302 to the second container 1304.

The second container 1304 may be positioned at the second level by being lowered (e.g., by a robotic container-handling vehicle 122) to a storage cell at the second level. The second container 1304 may be positioned in a storage cell adjacent to (but vertically separated from) a storage cell in which the first container 1302 is located, as depicted in Fig. 13. In this way, an item 506 that is moved through and out of the first opening 504 of the first container 1302 may fall through the top opening of the second container 1304 and into the second container 1304, thereby moving the item 506 from the first container 1302 to the second container 1304.

Finally, at step S1720, a drive mechanism 508,1004 is controlled to move items 506 stored within the first container 1302 towards and through the first opening 504 of the first container 1302 so that the items 506 can be received through the top opening of the second container 1304. As described in relation to the method depicted in Fig. 16, the first container 1302 may be as described with reference to Fig. 10, in which case the first container 1302 comprises the drive mechanism 1004, or the first container 1302 may be as described with reference to Figs. 5-9, in which case the first container 1302 is configured to interact with an external drive mechanism 508, such as conveyor belts 514 or sloped ribs.

### Penultimate comments

The containers described in relation to Figs. 5-17 are similar to the containers 112 described in relation to Fig. 1, in that they are stackable on top of each other, possibly in a self-supporting manner, the containers are movable by robotic container-handling vehicles 122 in both the X and Y directions 108, 110, and the containers may be lifted and lowered by robotic container-handling vehicles 122 in the Z direction 114 into columns 102 of the storage grid 100.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### Clauses

The following embodiments are also provided:

1. A container for use in an automated storage and retrieval system, the container comprising:
a first opening in a sidewall of the container arranged to enable insertion or removal of items therethrough;
a drive mechanism configured to engage with one or more items stored in the container to remove the items from the container via the first opening.

2. A method, for use in an automated storage and retrieval system, for moving an item from a first container to a second container, wherein each of the first and second containers comprises a first opening in a sidewall of the respective container arranged to enable insertion or removal of items therethrough, the method comprising:
positioning the first container to face a first direction;
positioning the second container to face a second direction opposite the first direction, so that the first opening of the first container is adjacent to the first opening of the second container; and
controlling a drive mechanism to move the one or more items towards and through the first opening of the first container and into the second container through the first opening of the second container.

3. A method, for use in an automated storage and retrieval system, for moving an item from a first container to a second container, wherein the first container comprises a first opening in a sidewall of the first container arranged to enable insertion or removal of items therethrough, and wherein the second container comprises a top opening, the method comprising:
positioning the first container at a first level in the automated storage and retrieval system;
positioning the second container at a second level in the automated storage and retrieval system, wherein the second level is lower than the first level; and
controlling a drive mechanism to move the one or more items towards and through the first opening of the first container so that the one or more items can be received through the top opening of the second container.

4. The method of clause 2 or 3, wherein positioning the first container comprises positioning the first container such that the one or more second openings in the base of the first container receive respective portions of the drive mechanism.

5. The method of clause 2 or 3, wherein controlling the drive mechanism comprises controlling the drive mechanism of the first container.

## Claims

1. A container for use in an automated storage and retrieval system, the container comprising:
a first opening in a sidewall of the container arranged to enable insertion or removal of items therethrough, wherein the container is configured to interact with a drive mechanism to enable items stored within the container to be removed from the container via the first opening; and
one or more second openings in a base of the container arranged to receive respective portions of the drive mechanism, wherein the one or more second openings in the base are arranged such that when the portions of the drive mechanism are received therein, the portions of the drive mechanism are able to engage with items stored in the container and move the items towards the first opening.

2. The container of claim 1, wherein each portion of the drive mechanism comprises one or more conveyor belts or one or more rollers, and wherein each second opening in the base of the container is arranged to receive a respective one or more conveyor belts or one or more rollers of the drive mechanism that is able to engage with items disposed over the second opening.

3. The container of claim 1, wherein each portion of the drive mechanism comprises a sloped rib, wherein each second opening in the base of the container is arranged to receive a respective sloped rib of the drive mechanism that is able to engage with items disposed over the second opening, and wherein the sloped rib has a negative incline directed towards the first opening such that items engaging with the sloped rib are moved towards the first opening.

4. The container of claim 3, wherein each sloped rib is actuatable in a vertical direction by means of one or more vertical actuators of the drive mechanism.

5. The container of any preceding claim, wherein the container is configured to be lowered over the drive mechanism so that the drive mechanism is received by the one or more portions.

6. The container of any preceding claim, further comprising a raised portion at an edge of a base of the container, the edge proximal to the first opening, wherein the raised portion is arranged to prevent items from passing through the first opening and out of the container when the container is not interacting with the drive mechanism.

7. A container for use in an automated storage and retrieval system, the container comprising:
a first opening in a sidewall of the container arranged to enable insertion or removal of items therethrough, wherein the container is configured to interact with a drive mechanism to enable items stored within the container to be removed from the container via the first opening; and
one or more coil mechanisms configured to engage with items disposed in the container, wherein each coil mechanism is arranged such that items disposed in the container are moved towards the first opening when the coil mechanism is rotated about its longitudinal axis.

8. The container of claim 7, wherein each coil mechanism is operatively connected to one or more primary gears, the one or more primary gears arranged to engage with one or more secondary gears of the drive mechanism such that rotation of the one or more secondary gears causes rotation of the coil mechanism.

9. The container of claim 8, wherein the container is configured to be moved to engage with the drive mechanism so that the one or more primary gears engage with the one or more secondary gears.

10. The container of any preceding claim, wherein the drive mechanism is integrated with the container.

11. The container of claim 10, further comprising a power source configured to power the drive mechanism; and optionally, wherein the power source is chargeable when the container is disposed at a charging station of the automated storage and retrieval system and/or when the container is in electrical communication with another container that is disposed at the charging station.

12. The container of claim 10 or 11, wherein the container is vertically stackable so as to be able to produce a vertical stack of a plurality of containers.

13. A method for retrieving an item from a container, wherein the container is as defined in any of claims 10 to 12, the method comprising:
controlling the drive mechanism to cause one or more items stored within the container to move towards the first opening of the container.

14. A method for retrieving an item from a container, wherein the container is as defined in any of claims 1 to 9, the method comprising:
moving, by a robot of the automated storage and retrieval system, the container to cause the container to engage with the drive mechanism; and
controlling the drive mechanism to cause one or more items stored within the container to move towards the first opening of the container.

15. The method of claim 14 wherein the container is as defined in claim 8 or 9, wherein moving the container comprises lowering, by a robot of the automated storage and retrieval system, the container over the drive mechanism so that the one or more primary gears of the container engage with one or more secondary gears of the drive mechanism.
